(19) Europäisches Patentamt
European Patent Office
Office européen des brevets

(11) **EP 1 821 131 B1**

(12) **EUROPEAN PATENT SPECIFICATION**

(45) Date of publication and mention
of the grant of the patent:
**04.04.2012 Bulletin 2012/14**

(51) Int Cl.:
*G02B 26/12* (2006.01)     *B41J 2/44* (2006.01)
*G03G 15/04* (2006.01)     *H04N 1/047* (2006.01)

(21) Application number: **07102640.5**

(22) Date of filing: **19.02.2007**

(54) **Optical Scanning Device and Image Forming Apparatus**

Optische Abtastvorrichtung und Bilderzeugungsvorrichtung

Dispositif de balayage optique et appareil de formation d'images

(84) Designated Contracting States:
**DE ES FR GB IT NL**

(30) Priority: **20.02.2006  JP 2006042800**
**08.02.2007  JP 2007029230**

(43) Date of publication of application:
**22.08.2007  Bulletin 2007/34**

(73) Proprietor: **Ricoh Company, Ltd.**
**Tokyo 143-8555 (JP)**

(72) Inventor: **Maeda, Katshuhiko**
**Tokyo 143-8555 (JP)**

(74) Representative: **Schwabe - Sandmair - Marx**
**Patentanwälte**
**Stuntzstraße 16**
**81677 München (DE)**

(56) References cited:
**EP-A- 1 424 609       EP-A- 1 574 345**
**EP-A2- 1 096 292      US-A- 5 179 277**
**US-A- 5 561 743       US-A1- 2001 028 387**
**US-A1- 2004 160 506   US-A1- 2005 041 990**

**Description**

BACKGROUND OF THE INVENTION

1. Field of the Invention

The present invention relates to an optical scanning device for performing optical writing in accordance with input image signals and to image forming apparatuses, such as copiers, printers, facsimile apparatuses, and printers (for both color and black-and-white) that include such optical scanning device.

2. Description of the Related Art

In a known image forming apparatus using light-beams scanning device, light beams are modulated with image data and are deflected at a constant angular velocity in a main-scanning direction by rotation of deflecting means (hereinafter referred to as a "polygon mirror"), the constant angular-velocity deflection is corrected to constant velocity deflection by an fθ lens, and the resulting beams scan on an image holder (hereinafter referred to a "photoreceptor"). However, the known apparatus has a problem in that the image magnification varies from apparatus to apparatus due to variations in the lens characteristics. In particular, when a plastic lens is used, the shape and the refractive index of the plastic lens change due to changes in ambient temperature and changes in the temperature inside the apparatus. Thus, the scanning position on an image surface of the photoreceptor shifts, and a magnification error in the main-scanning direction occurs; thus, it is impossible produce a high-quality image. In an apparatus that uses multiple laser beams and multiple lenses to produce an image of multiple colors, magnification errors thereof cause color shifting; thus, it is impossible to produce a high-quality image. Accordingly, the image magnifications of the respective colors must be made to match each other as much as possible.

In light of such situations, for an image forming apparatus for forming an image by scanning light beams, Japanese Unexamined Patent Application Publication No. 2002-96502 (Patent Document 1) and Japanese Unexamined Patent Application Publication No. 9-58053 (Patent Document 2) disclose technologies for correcting image magnification errors in the main-scanning direction which are generated due to various factors, such as changes in ambient temperature and changes in the temperature inside the apparatus. In Patent Documents 1 and 2, two light-beam detecting means are provided, and a time from when one of them detects a light beam until the other one detects a light beam is measured. Based on the result of this measurement, a pixel clock frequency is changed to correct the image magnification.

In Patent Documents 1 and 2, the light beams that are incident on the light-beam detecting means are transmitted through an fθ lens. As described above, the shape and the refractive index of the lens change due to changes in ambient temperature, changes in the temperature inside the apparatus, and so on, and thus the image magnification changes. With respect to an image position, the position at the scanning-start side does not substantially change, but the position at the scanning-end side changes significantly. In order to maintain the image quality in such a situation, it is necessary to frequently perform measurement between two points and perform correction, but it is difficult to change the pixel clock frequency during continuous printing. In a color-image forming apparatus, particularly, an apparatus in which the scanning direction of at least one light beam is opposite to that of other light beams, the magnification error directly leads to color shifting. In the color-image forming apparatus, it is more important to reduce color shifting than a magnification error, and it is also necessary to maintain a state in which there is color shifting.

US 2001/0028387 A and EP 1096292 disclose related prior art.

SUMMARY OF THE INVENTION

An optical scanning apparatus includes a light source, deflecting means, an fθ lens, and first and second light-beam detecting means. The light source outputs light beams, and is turned on and is controlled in accordance with image data. The deflecting means deflects the output light beams in a main-scanning direction. The fθ lens corrects the deflected light beams from constant-angular-velocity scanning to constant-velocity scanning. The first and second light-beam detecting means detect the light beams, deflected by the deflecting means, at two spots along the main-scanning direction. The first light-beam detecting means is located at a scanning-start side, and the second light-beam detecting means is located at a scanning-end side. The light beam that is incident on the first light-beam detecting means is not transmitted through the fθ lens, and the light beam that is incident on the second light-beam detecting means is transmitted through the fθ lens according to claim 1.

Further, an image forming apparatus comprising the features of claim 6 is disclosed.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is a schematic diagram showing a principal part of an image forming apparatus according to a first embodiment of the present invention;

FIG. 2 is a schematic diagram showing a light-beam scanning device and an image-formation control system in an image forming apparatus according to the first embodiment;

FIG. 3 is a schematic diagram showing a tandem image-forming apparatus according to the first embodiment;

FIG. 4 is a block diagram showing the configuration of a write-start-position controller shown in FIG. 2;

FIG. 5 is a block diagram showing one example of a stage prior to the image forming apparatus shown in FIG. 2;

FIG. 6 is a timing chart showing timing of signals output from the write-start-position controller shown in FIGS. 2 and 4;

FIG. 7 is a block diagram showing the VCO clock generator shown in FIG. 2;

FIG. 8 is a block diagram showing details of the magnification error detector shown in FIG. 2;

FIG. 9 is a schematic view showing changes in the scan position of an fθ lens due to environmental variations (temperature variations) of in the image forming apparatus shown in FIG. 2;

FIG. 10 is a flowchart showing a processing procedure for image magnification correction in the first embodiment;

FIG. 11 is a timing chart showing output timing of a pixel clock output from a phase-synchronization clock generator in a second embodiment;

FIG. 12 is a diagram showing pixels to which a period change is made;

FIG. 13 is a diagram showing an example in which pixels to which a period change is made are equally distributed over the width of an image and the positions thereof are changed for each main-scanning line so that the pixels to which the period change is made are not located at the same position in the sub-scanning direction;

FIG. 14 is a diagram showing a schematic configuration of a direct-transfer tandem color-image forming apparatus according to a third embodiment;

FIG. 15 is a diagram showing image-position shift correction patterns formed on a transfer belt;

FIG. 16 is a schematic diagram showing a light-beam scanning device and an image-formation control system in the image forming apparatus according to the third embodiment;

FIG. 17 is a flowchart showing a processing procedure for correction processing in the third embodiment;

FIG. 18 is a flowchart showing a processing procedure for an image forming operation in the third embodiment;

FIG. 19 is a flowchart showing a processing procedure for correction processing in a variation of the third embodiment;

FIG. 20 is a schematic diagram showing a direct-transfer tandem image-forming apparatus according to a fourth embodiment; and

FIG. 21 is a top view of the light-beam scanning device shown in FIG. 2.

DESCRIPTION OF THE PREFERRED EMBODIMENTS

It will be understood that if an element or layer is referred to as being "on", "against", "connected to" or "coupled to" another element or layer, then it can be directly on, against, connected or coupled to the other element or layer, or intervening elements or layers may be present. In contrast, if an element is referred to as being "directly on", "directly connected to" or "directly coupled to" another element or layer, then there are no intervening elements or layers present. Like numbers referred to like elements throughout. As used herein, the term "and/or" includes any and all combinations of one or more of the associated listed items.

Spatially relative terms, such as "beneath", "below", "lower", "above", "upper" and the like may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements describes as "below" or "beneath" other elements or features would hen be oriented "above" the other elements or features. Thus, term such as "below" can encompass both an orientation of above and below. The device may be otherwise oriented (rotated 90 degrees or at other orientations) and the spatially relative descriptors herein interpreted accordingly.

Although the terms first, second, etc. may be used herein to described various elements, components, regions, layers and/or sections, it should be understood that these elements, components, regions, layer and/or sections should not be limited by these terms. These terms are used only to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

Referring now to the drawings, wherein like reference numerals designate identical or corresponding parts throughout the several views, example embodiments of the present patent application are described.

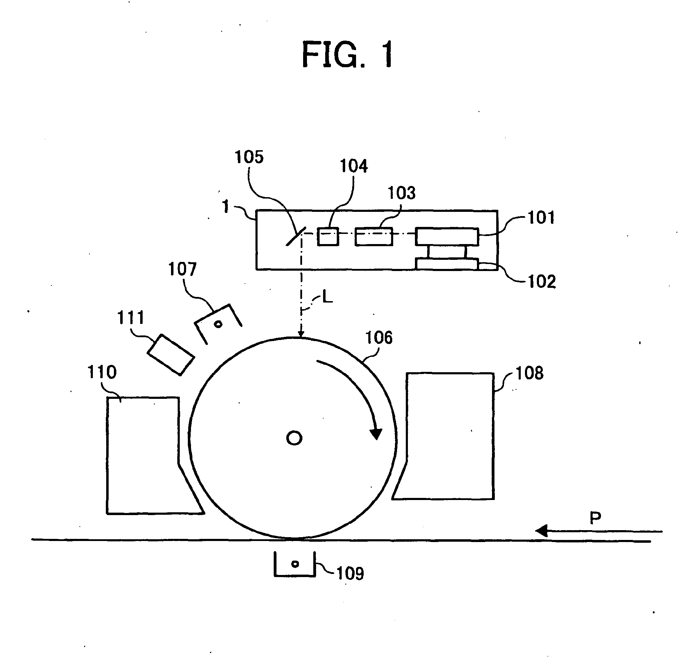

Referring to Figure 1 of the drawings, an image forming apparatus 1 according to at least one example embodiments of the present invention is described.

FIG. 1 is a schematic diagram showing a principal part of an image forming apparatus according to a first embodiment of the present invention. Referring to FIG. 1, a light-beam scanning device 1 (which serves as an "optical unit") includes a laser diode (hereinafter referred to as an "LD") that is turned on to emit light beams L (hereinafter also referred to as "light beams") based on image data, a collimator lens (not shown) that collimates the emitted light beams L, a cylindrical lens (not shown) that focuses in parallel lines in a sub-scanning direction. The light-beam scanning device 1 further includes a polygon mirror 101 that receives and deflects the light beams from the cylindrical lens, a polygon motor 102 that drives and rotates the polygon mirror 101 at high speed, an fθ lens 103 that converts the constant-angular-velocity scanning of the light beams deflected by the polygon mirror 102 into constant-velocity scanning, a barrel toroidal lens (BTL) 104, and a return mirror 105. The light beams L emitted from the LD are collimated by the collimator lens (not shown), and the collimated beams pass through the cylindrical lens, are deflected by the polygon mirror 101 rotated by the polygon motor 102, and pass through the fθ lens 103 and the BTL 104. The light beams L are then reflected by the return mirror 105 and scan on a photoreceptor 106. The BTL 104 performs focusing (a light-condensing function and a sub-scanning-direction position correcting function (e.g., for optical face tangle)).

A charger 107, a developing unit 108, a transfer unit 109, a cleaning unit 110, and a discharger 111 are disposed around the photoreceptor 106 to constitute image-forming means. The image-forming means performs charging, exposure, developing, and transferring, which are typical electrophotographic processes, to form an image on recording paper P. A fixing device (not shown) fixes the image on the recording paper P.

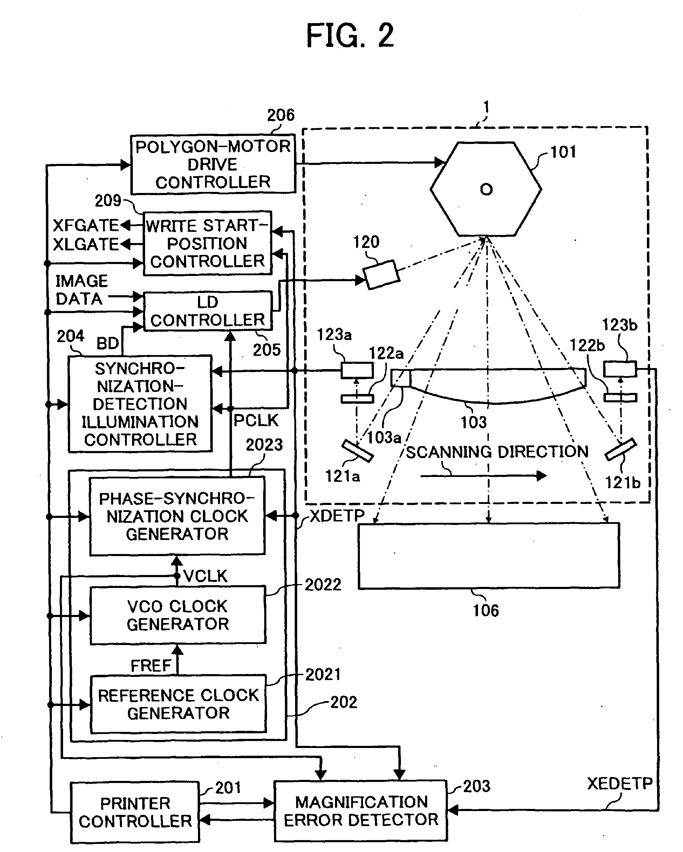

FIG. 2 is a schematic diagram showing the light-beam scanning device (the optical unit) and an image-formation control system in the image forming apparatus. In this figure, a peripheral image-formation control system is further added to a plan view of the light-beam scanning device 1 shown in FIG. 1. The control system includes a printer controller 201, a pixel-clock generator 202, a magnification error detector 203, a synchronization-detection illumination controller 204, an LD controller 205, a polygon-motor drive controller 206, and a write-start-position controller 209. The image forming apparatus has one printer controller 201 that is common to all colors and a plurality of each controller described above for the respective colors. The pixel-clock generator 202 includes a reference-clock generator 2021, a VCO (voltage-controlled oscillator) clock generator 2022 (which may be a phase-locked loop (PLL) circuit), and a phase-synchronization clock generator 2023. First and second synchronization detecting sensors 123a and 123b for detecting light beams are provided at two opposite ends along the main scanning direction of the light-beam scanning device 1. Light beams L are emitted from the LD unit 120 and are reflected by the polygon mirror 101. The reflected light beams L pass through the fθ lens 103. The light beams L are then reflected by first and second mirrors 121a and 121b, are focused by first and second lenses 122a and 122b, and are incident on the first and second synchronization detecting sensors 123a and 123b, respectively. A start-side synchronization detection signal XDETP output from the first synchronization detecting sensor 123a and a pixel clock PCLK output from the pixel-clock generator 202 are input to the write-start-position controller 209.

In this configuration, when the light beam L is incident on the first synchronization detecting sensor 123a, the start-side synchronization detection signal XDETP is output, and when the light beam L is incident on the second synchronization detecting sensor 123b, an end-side synchronization detection signal XEDETP is output. These signals XDETP and XEDETP are input to the magnification error detector 203. The magnification error detector 203 measures a time from the falling edge of the start-side synchronization detection signal XDETP to the falling edge of the end-side synchronization detection signal XEDETP, and compares the measured time with a reference time to determine the time difference therebetween. The magnification error detector 203 then generates an amount of correction corresponding to the time difference, that is, correction data for changing the pixel clock frequency. The magnification error detector 203 then sends the generated correction data to the pixel-clock generator 202 to correct the image magnification.

The correction data indicates one or both of the frequency setting value of a reference clock FREF output from the reference clock generator 2021 and the setting value of a division ratio N of the PLL circuit.

The start-side synchronization detection signal XDETP output from the first synchronization detecting sensor 123a is also sent to the pixel-clock generator 202. In the pixel-clock generator 202, the phase-synchronization clock generator 2023 generates pixel clocks PCLK that are synchronized with the start-side synchronization detection signal XDETP and sends the pixel clocks PCLK to the LD controller 205 and the synchronization-detection illumination controller 204. In order to first detect the start-side synchronization detection signal XDETP, the synchronization-detection illumination controller 204 forcibly turn on the LD by turning on an LD forced-illumination signal BD. In scanning after the start-side synchronization detection signal XDETP is detected, the synchronization-detection illumination controller 204 generates an LD forced-illumination signal BD at a timing at which the start-side detection signal XDETP can be reliably detected without generating flare, in accordance with the start-side synchronization detection signal XDETP and the pixel clock PCLK. The synchronization-detection illumination controller 204 then sends the generated LD forced-illumination signal BD to the LD controller 205. Similarly, when the end-side synchronization detection signal XEDETP is to be detected, the synchronization-detection illumination controller 204 generates an LD forced-illumination signal BD for turning on the LD at a timing at which the end-side detection signal XEDETP can be reliably detected without generating flare, in accordance with the start-side synchronization detection signal XDETP and the pixel clock PCLK. The synchronization-detection illumination controller 204 then sends the generated LD forced-illumination signal BD to the LD controller 205.

The LD controller 205 controls the illumination of the LD in accordance with an image signal that is synchronized with the synchronization-detection forced-illumination signal BD output from the synchronization-detection illumination controller 204 and the pixel clock PCLK output from the phase-synchronization clock generator 2023. The light beams L emitted from the LD unit 120 are deflected by the polygon mirror 101, pass through the fθ lens 103, and scan on the photoreceptor 106. In accordance with a control signal sent from the printer controller 201, the polygon-motor drive controller 206 controls the rotation of the polygon motor 102 at a predetermined rotation speed.

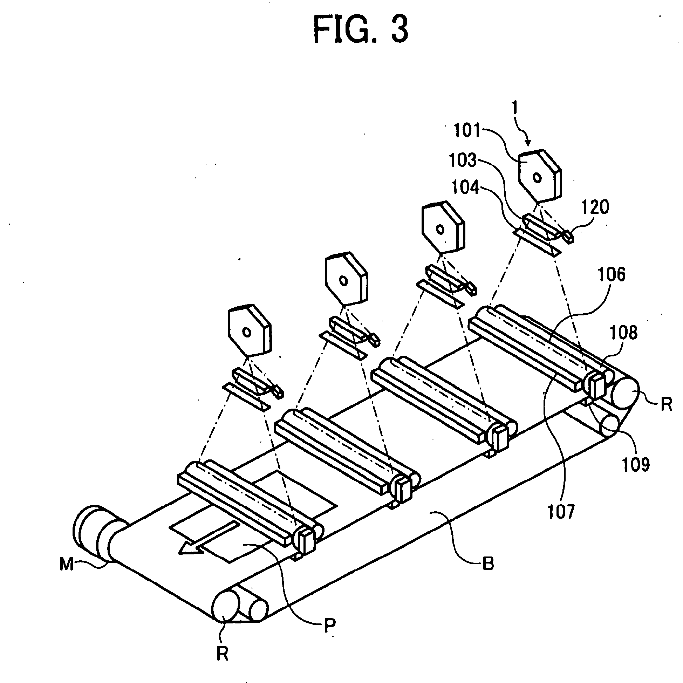

FIG. 3 is a schematic diagram of a four-drum color image forming apparatus according to the present embodiment. In this case, the image forming apparatus may be a direct-transfer tandem image-forming apparatus. This image forming apparatus includes four image forming sections (each section including the photoreceptor 106, the charger 107, the developing unit 108, the transfer unit 109, and the cleaning unit 110 (not shown)) and four optical units (i.e., light-beam scanning devices 1) in order to form a color image in which images of four colors, namely, yellow (Y), magenta (M), cyan (C), and black (BK), are superimposed. Thus, the image forming apparatus shown in FIG. 3 has a configuration in which four image forming apparatuses shown in FIG. 1 are arranged. The image forming apparatus shown in FIG. 3 forms an image of a first color on recording paper P, conveyed in the arrow direction by a transfer belt B, and sequentially transfers images of a second color, a third color and a fourth color to the recording paper P to thereby form a color image in which the images of four color are superimposed. A fixing device (not shown) then fixes the image on the recording paper P.

The transfer belt B is provided between rollers R in a tensioned state and is driven by a conveying motor M. As each of the four optical units, the optical unit shown in FIG. 2 is provided. In this case, since independent light-beam scanning devices are provided for the respective colors, magnification corrections are performed independently for the respective colors.

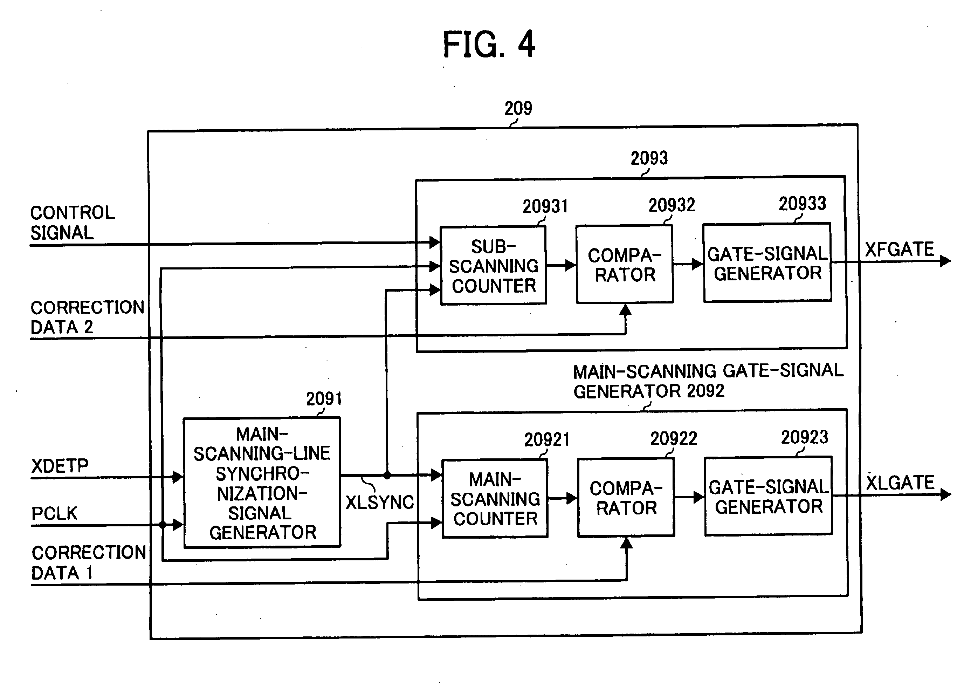

FIG. 4 is a block diagram showing the configuration of the write-start-position controller 209. The write-start-position controller 209 includes a main-scanning-line synchronization-signal generator 2091, a main-scanning gate-signal generator 2092, and a sub-scanning gate-signal generator 2093. The main-scanning gate-signal generator 2092 includes a main-scanning counter 20921, a comparator 20922, and a main-scanning gate-signal generator 20923. The sub-scanning gate-signal generator 2093 includes a sub-scanning counter 20931, a comparator 20932, and a sub-scanning gate-signal generator 20933.

The main-scanning-line synchronization-signal generator 2091 generates a signal XLSYNC for operating the main-scanning counter 20921 in the main-scanning gate-signal generator 2092 and the sub-scanning counter 20931 in the sub-scanning gate-signal generator 2093. The main-scanning gate-signal generator 2092 generates a signal XLGATE for determining an image write timing in the main scanning direction. The sub-scanning gate-signal generator 2093 generates a signal XFGATE for determining an image write timing in the sub-scanning direction.

The main-scanning counter 20921 operates in accordance with the signal XLSYNC and the pixel clock PCLK. The comparator 20922 compares the value of the main-scanning counter 20921 with first correction data supplied from the printer controller 201 and outputs the comparison result. The gate-signal generator 20923 generates a signal XLGATE based on the comparison result of the comparator 20922. The sub-scanning counter 20931 operates in accordance with a control signal from the printer controller 201, the signal XLSYNC, and the pixel clock PCLK. The comparator 20932 compares the value of the sub-scanning counter 20931 with second correction data supplied from the printer controller 201 and outputs the comparison result. The gate-signal generator 20933 generates a signal XFGATE based on the comparison result of the comparator 20932. With respect to the main scanning, the write-start-position controller 209 can correct a write position for each period of the pixel clock PCLK, that is, for each dot. With respect to the sub scanning, the write-start-position controller 209 can correct a write position for each period of the signal XLSYNC, that is, for each line.

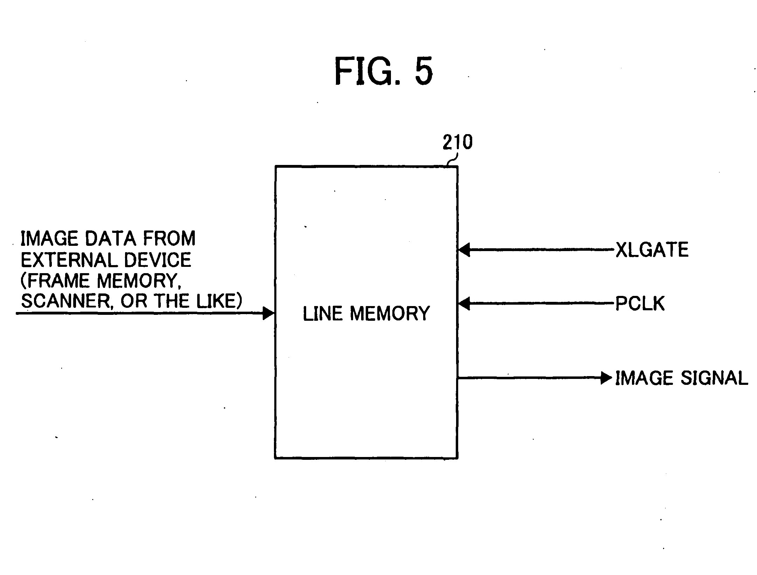

FIG. 5 is a block diagram showing one example of a stage prior to the image forming apparatus shown in FIG. 2. A line memory 210 is provided at a stage prior to the image forming apparatus. The line memory 210 receives image data from an external device at timing of XFGATE and outputs an image signal in synchronization with the image clock PCLK only when XLGATE is "low". The output image signal is sent to the LD controller 205 and the LD is turned on at this point of time. Thus, the printer controller 201 can change the correction data set in the comparators 20922 and 20932, thereby making it possible to change the timings of XLGATE and XFGATE. This also changes the input timing of image signals and changes the image-write start positions in the main-scanning direction and the sub-scanning direction.

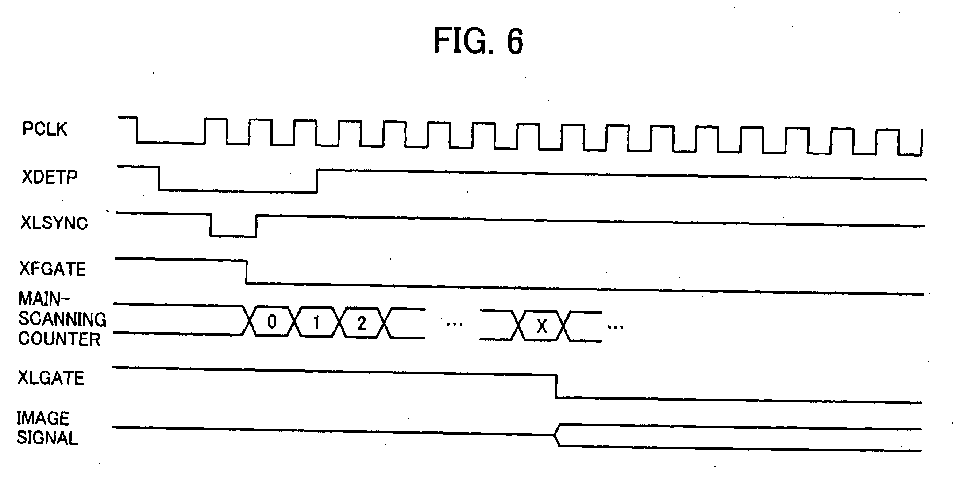

FIG. 6 is a timing chart showing the timing of signals output from the write-start-position controller 209. As can be seen from the timing chart, the main-scanning counter is reset by XLSYNC and is incremented by the pixel clock PCLK. The comparator 20922 compares its counter value with correction data ("X" in this case) set by the printer controller 201. When the counter value becomes equal to X, the comparator 20922 outputs information to that effect and the gate-signal generator 20923 causes XLGATE to go "low" (active). XLGATE is a signal that is the "low" state while writing is performed over the width of the image in the main-scanning direction. In the sub-scanning direction, the counter value is incremented by XLSYNC, but other operations are similar to those in the main-scanning direction.

As described above, the pixel-clock generator 202 includes the reference-clock generator 2021, the VCO (voltage-controlled oscillator) clock generator 2022, and the phase-synchronization clock generator 2023.

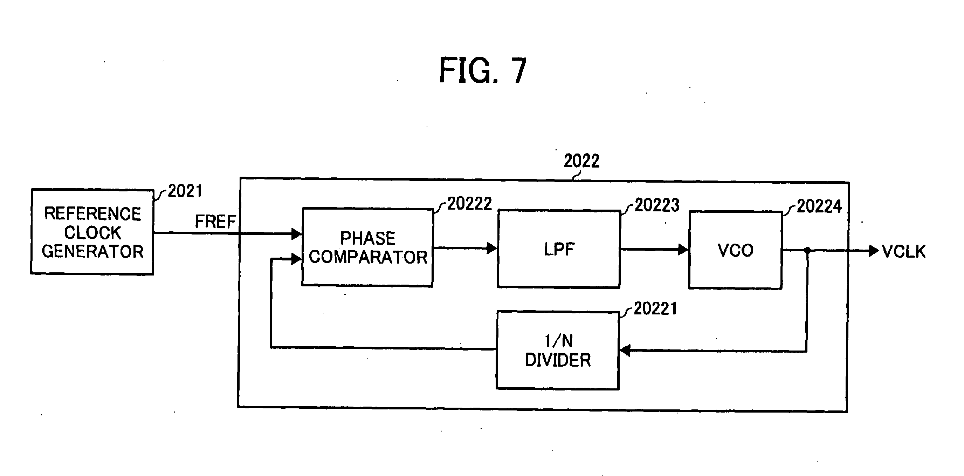

FIG. 7 is a block diagram showing the VCO clock generator 2022. A reference clock signal FREF sent from the reference-clock generator 2021 and a signal obtained by causing a 1/N divider 20221 to divide VCLK by N are input to a phase comparator 20222 in the VCO clock generator 2022. The phase comparator 20222 compares the phases of the falling edges of the two signals and outputs error components at a constant current. An LPF (low-pass filter) 20223 removes unwanted high-frequency components and noise from the error components and sends the resulting components to a VCO 20224. The VCO 20224 outputs an oscillation frequency that depends on the output of the LPF 20223. Thus, the printer controller 201 can change the frequency of FREF and the division ratio N, thereby making it possible to change the frequency of VCLK.

The phase-synchronization clock generator 2023 generates a pixel clock PCLK from VCLK, which has a frequency set to eight times the pixel clock frequency, and further generates a pixel clock PCLK that is synchronized with the start-side synchronization detection signal XDETP.

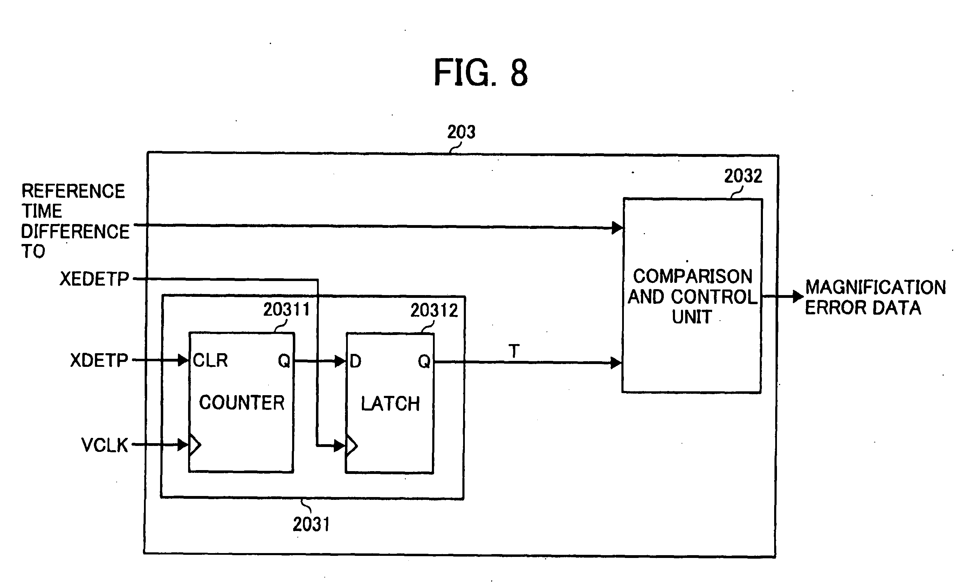

FIG. 8 is a block diagram showing details of the magnification error detector 203. The magnification error detector 203 includes a time-difference counting unit 2031 and a comparison-and-control unit 2032. Further, the time-difference counting unit 2031 includes a counter 20311 and a latch 20312. In the magnification error detector 203 having such a configuration, when measurement between two points (i.e., between the start-side synchronization detecting sensor 123a and the end-side synchronization detecting sensor 123b) is started, the count value of the counter 20311 is first reset by the start-side detection signal XDETP, is increased by the clock VCLK, and is latched at the falling edge of the end-side synchronization detection signal XEDETP. The magnification error detector 203 uses the comparison-and-control unit 2032 to compare the count value (a time difference T) with a preset reference count value (a time difference T0) and determines difference data therefrom as magnification error data. The magnification error data is sent to the printer controller 201. Based on the magnification error data, the printer controller 201 determines the setting value of the frequency of FREF and the division ratio N and sends, as correction data, the determined information to the pixel-clock generator 202. Based on the correction data, the pixel-clock generator 202 changes the frequency of the pixel clock PCLK and outputs the changed pixel clock.

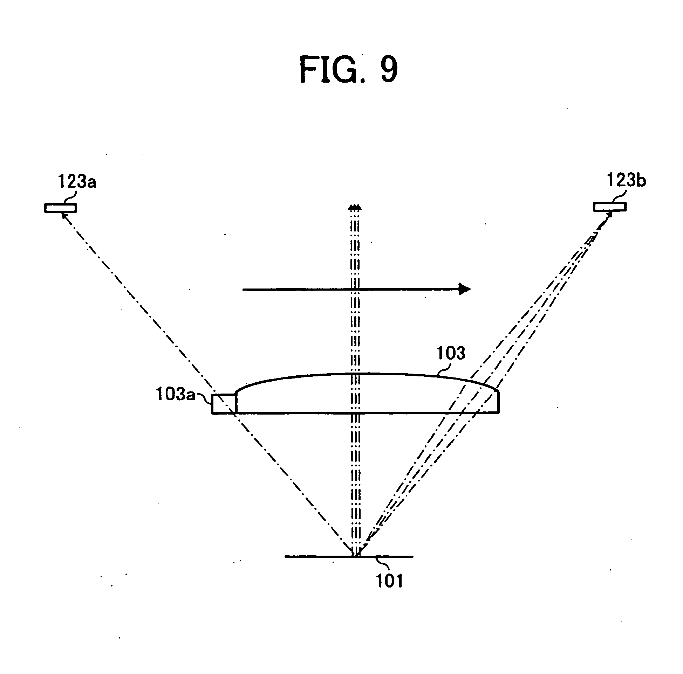

FIG. 9 is a schematic diagram showing changes in scan position due to environmental variations (in this case, temperature variations). As shown in FIG. 9, with respect to the center portion of the fθ lens 103, the scanning position does not substantially change. However, with respect to the edge portions at which the first and second synchronization detecting sensors 123a and 123b are disposed, the scan position changes significantly. This means that, since the positions of the first and second synchronization detecting sensors 123a and 123b are fixed, the angle of the polygon mirror 101 when light beams are incident on the synchronization detecting sensors 123a and 123b varies due to temperature variations. Three light beams incident on the second synchronization detecting sensor 123b shown in FIG. 9 represent respective cases in which the angle of the polygon mirror 101 varies. As a result, the scan time (i.e., count value) from the first synchronization detecting sensor 123a to the second synchronization detecting sensor 123b changes. In order to deal with this change, in the present embodiment, the start-side first synchronization detecting sensor 123a detects a light beam that does not pass through the fθ lens 103. That is, the first synchronization detecting sensor 123a detects a beam that passes through a plate 103a provided at an edge portion of the fθ lens 103. The scan position of this beam does not change due to temperature variations. As a result, the measured count value includes only a change at the right half of the fθ lens 103. Thus, doubling this change also makes it possible to correct the left-half change.

The corrected frequency f' can be determined by:

$$f' = fo \times T0 / (2T - T0),$$

where fo indicates the frequency before the correction. In this embodiment, the change is simply doubled based on the assumption that the characteristics of the left half and right half of the fθ lens 103 are the same and the temperature changes are also the same. Needless to say, it is also possible to perform correction using the values of pre-measured characteristics.

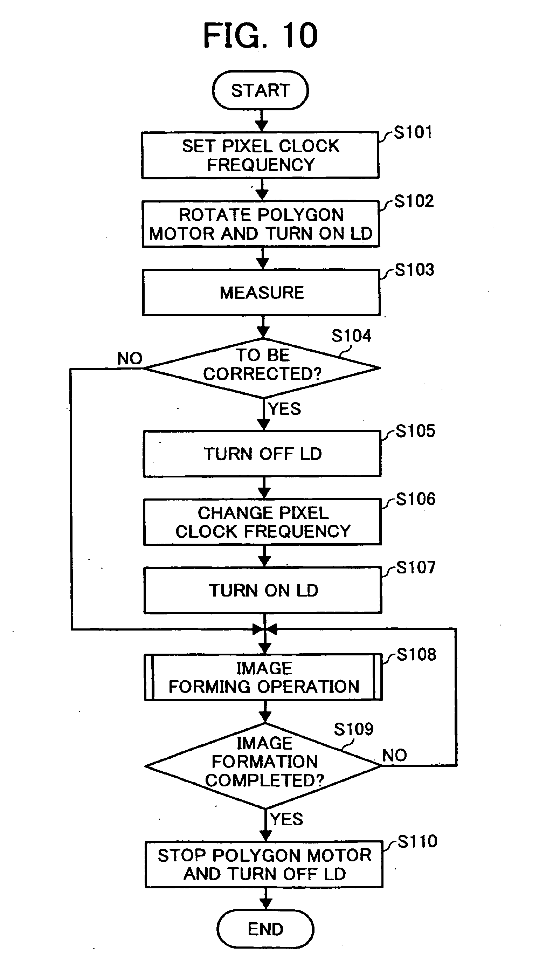

FIG. 10 is a flowchart showing a processing procedure for image magnification correction in the present embodiment. Correction data stored in the printer controller 201 is set for each controller, and a pixel clock frequency and so on are set (in step S101). In the setting, correction data determined in a previous correction operation is used. Alternatively, when no correction has been previously performed, a preset default is used. The polygon motor 102 is rotated at a predetermined rotation speed and the LD is turned on (in step S102) in order to detect the start-side synchronization detection signal XDETP. Subsequently, the LD is turned on in order to also detect the end-side synchronization detection signal XEDETP. A time between XDETP and XEDETP is determined, so that a time difference between two points, i.e., the start-side point and the end-side point, is measured (in step S103). Based on the measurement result, a determination is made (in step S104) as to whether or not the image magnification is to be corrected. This determination is made based on a magnification correction resolution. When an error determined from the time difference is greater than or equal to one half the correction resolution, the LD is temporarily turned off (in step S105). The setting value of a frequency required for correcting the image magnification is determined and is supplied to the pixel-clock generator 202. Based on the setting value, the pixel-clock generator 202 generates a pixel clock PCLK (in step S106). The LD is turned on again (in step S107) so as to detect the start-side synchronization signal XDETP. An image forming operation is started (in step S108). When the error is smaller than one half the correction resolution, no correction is performed and the process jumps from step S104 to step S108, in which an image forming operation is started. Subsequently, a determination is made (in step S109) as to whether or not the image forming operation is completed. When it is determined that the image forming operation is completed, the LD is turned off and the polygon motor 102 is stopped (in step S110), thereby ending the processing. The processing is performed for each color.

In a second embodiment, with respect to the pixel clock PCLK described in the first embodiment, the phase at the rising edge is further advanced or delayed by an amount corresponding to a half period of VCLK, in accordance with the correction data supplied from the printer controller 201.

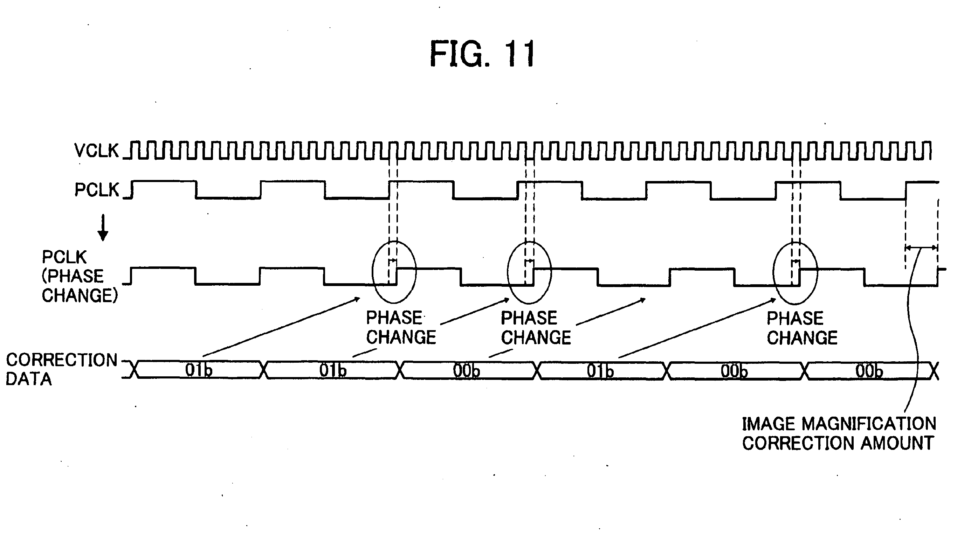

FIG. 11 is a timing chart showing the timing of the pixel clock PCLK. When the correction data supplied from the printer controller 201 is "00b", no correction is performed. When the correction data is "01b", the phase is delayed by an amount corresponding to 1/16th of PCLK (i.e., the period is extended). When the correction data is "10b", the phase is advanced by an amount corresponding to 1/16th of PCLK (i.e., the period is reduced). The correction data is supplied in synchronization with the pixel clock PCLK, so that the phase of the next rising edge of PCLK is corrected. When the correction data is "00b", the period of PCLK is eight times the period of VCLK. When the correction data is "01b", the phase of the rising edge is delayed by a half period of VCLK, i.e., by an amount corresponding to 1/16th of PCLK. Thereafter, the phase is delayed by an amount corresponding to 1/16th of PCLK relative to the original clock PCLK. In the example shown in FIG. 11, since the phase shift is performed three times, the phase of PCLK is delayed by an amount corresponding to a total of 3/16th of PCLK. Thus, the image magnification is corrected by an amount corresponding to 3/16th of PCLK.

In the case of the present embodiment, the magnification error detector 203 determines the magnification error data and sends the data to the printer controller 201, as in the first embodiment described above. Based on magnification error data, the printer controller 201 determines the number of pixels to which a period change is made, determines whether or not to advance or delay the phase, and sends, as correction data, the determined information to the phase-synchronization clock generator 2023. As indicated in the timing chart shown in FIG. 11, the phase-synchronization clock generator 2023 changes the period of the pixel clock PCLK to correct the image magnification. For example, when it is assumed that the reference count value (the reference time difference T0) from the start-side synchronization detection signal XDETP to the end-side synchronization detection signal XEDETP is 20000 and the value measured when the correction is executed is 20005, the image shrinks by an amount expressed by:

$$(20005 - 20000) \times 2 = 10VCLK.$$

Thus, the phase is delayed (the frequency is extended) by an amount corresponding to 1/16 PCLK $\times$ 20.

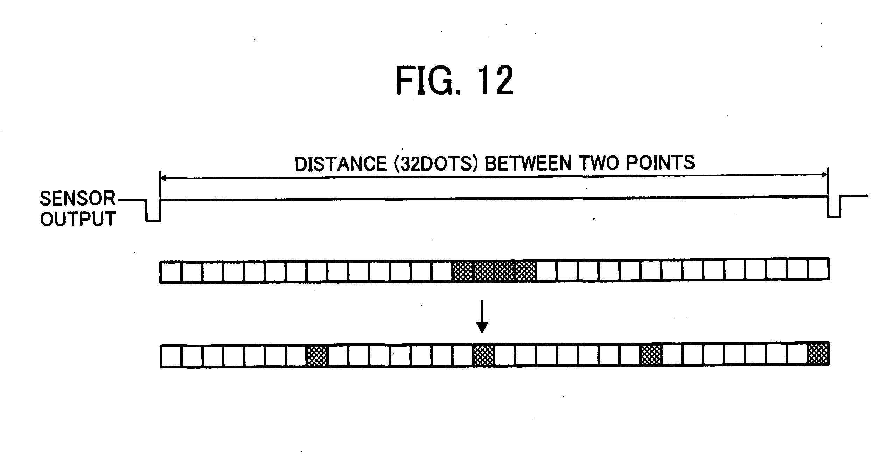

FIG. 12 shows pixels to which a period change is made. It is now assumed that the number of corresponding dots between the two points XDETP and XEDETP is 32 and the phases of four of 16 pulses of PCLK are corrected. In this case, if the period of PCLK is changed for four consecutive pixels, the overall magnification is corrected but an image of the corrected spot extends (or shrinks) locally. Accordingly, the period of PCLK is changed at an 8-dot cycle based on the following expression:

$$\text{Period of Pixels to which Change is made} = \text{Image Width}$$

$$/ \text{ Number of Pixels to which Change is made}$$

$$= 32/4$$

$$= 8.$$

Consequently, pixels to which a period change is made can be equally distributed over the width of the image. Needless to say, the equation for determining the period is not particularly limited to the above-noted equation and thus may be any equation that can distribute pixels over the image area.

In the present embodiment, the magnification may also be corrected in combination with the change of the pixel clock frequency. In such a case, when the period for each pixel is changed to compensate for periods between the steps of changing the pixel clock frequency, the accuracy (the resolution) can be improved.

In the present embodiment, the arrangement may also be such that pixels to which a period change is made are equally distributed over the width of the image and the positions thereof are changed for each main-scanning line so that the pixels to which the period change is made are not located at the same position in the sub-scanning direction.

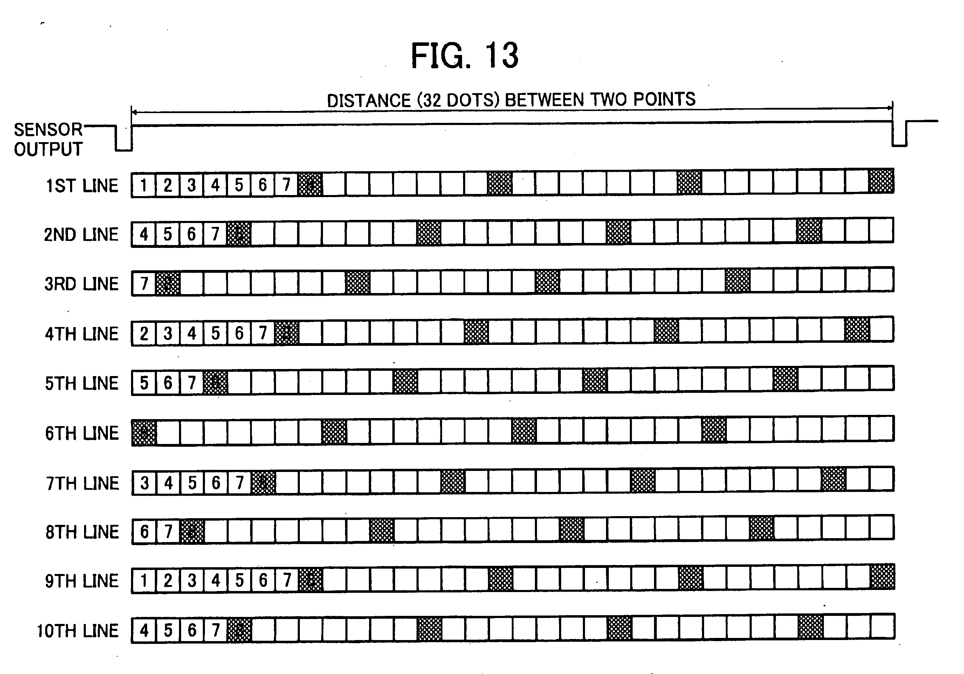

FIG. 13 shows an example of such a case. In FIG. 13, the distance between two points is 32 dots, and four pixels to which a period change is to be made at an 8-dot cycle are to be inserted. A counter that operates based on the pixel clock PCLK determines the position of a pixel to which the period change is to be made. For the first line, counting is started from "1" and when the counter value is 8, 16, 24, and 32, the period is changed. For the second and subsequent lines, the position is changed every three dots for each line, based on the following expression:

$$\text{Amount of Position Change} = \text{Period at which Pixel}$$

$$\text{Change is made} \times 3/7$$

$$= 8 \times 3/7$$

$$\approx 3.$$

When the amount of change exceeds the period at which the pixel change is made, a change corresponding to the exceeded amount is made to the first line. Specifically, for the first line, counting is started from "1", but for the second line, the position is shifted by an amount corresponding to three dots and the start value of the counter is thus set to 1 + 3 = 4. As a result, the positions of pixels to which a period change is made are shifted (i.e., advanced) by an amount corresponding to three dots. For the third line, the position is further shifted by an amount corresponding to three dots and thus the start value of the counter is set to 4 + 3 = 7. As a result, the positions of pixels to which a period change is made are shifted (i.e., advanced) by an amount corresponding to three dots. For the fourth line, the start value of the counter is set to 7 + 3 = 10. However, it exceeds the period of the pixels to which a change is made, i.e., eight dots, the start value of the counter is set to an amount corresponding to the exceeded amount "10 - 8 = 2".

The start value of the counter is changed for each line, as described above, to thereby change the positions of pixels to which a period change is made. The expression for determining the amount of position change is not particularly limited to the above-noted expression, and any expression that allows the positions to be randomly changed may be used.

Other units and elements for which descriptions have not been particularly given are configured in the same manner as those in the first embodiment and function in the same manner.

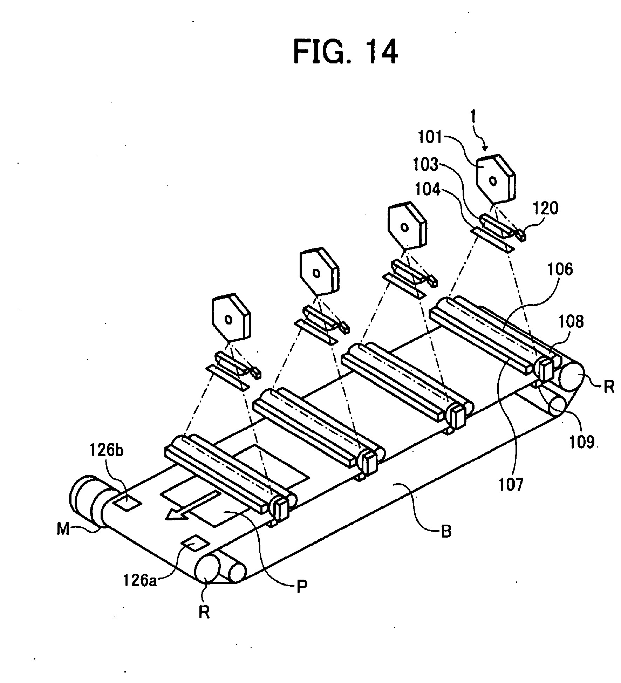

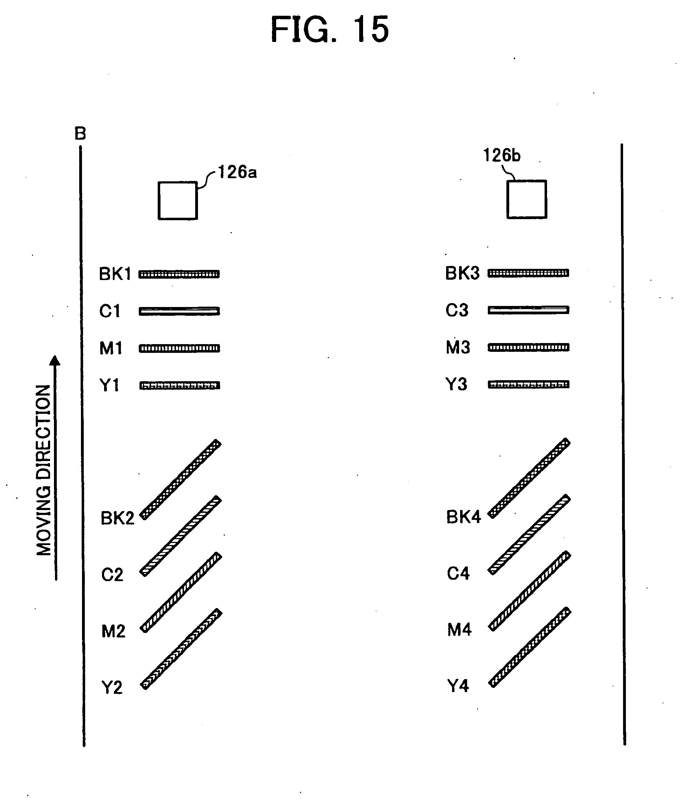

FIG. 14 is a diagram schematically showing the configuration of a direct-transfer tandem color-image forming apparatus according to a third embodiment of the present invention. This embodiment has a configuration in which first and second sensors 126a and 126b for detecting patterns for correcting an image position shift are added to the configuration in the first embodiment. Outputs of the detection performed by the first and second sensors 126a and 126b are input to the printer controller 201. The first and second sensors 126a and 126b are reflective optical sensors for detecting image-position-shift correction patterns (lateral-line patterns and oblique-line patterns) formed on the transfer belt B. Based on the result of the detection, the printer controller 201 corrects the image magnification in the main-scanning direction and image position shifts between the individual colors in the main-scanning direction and the sub-scanning direction. As shown in FIG. 15, the image-position-shift correction patterns are formed at predetermined intervals in the sub-scanning direction. The image-position-shift correction patterns include lateral-line patterns BK1, C1, M1, Y1, BK3, C3, M3, and Y3, which are formed at two opposite ends of the transfer belt B, and oblique-line patterns BK2, C2, M2, Y2, BK4, C4, M4, and Y4, which are formed obliquely at the downstream side in the rotation direction of the transfer belt B with an angle of 45° relative to the longitudinal side (i.e., rotation direction) of the transfer belt B. The first sensor 126a detects the correction patterns BK1, C1, M1, Y1, BK2, C2, M2, and Y2, which are formed at one end, and the second sensor 126b detects the correction patterns BK3, C3, M3, Y3, BK4, C4, M4, and Y4, which are formed at the other end. Based on outputs of the detection, the printer controller 201 determines the amount of color shift (position shift). Correction of the color shift will be described below.

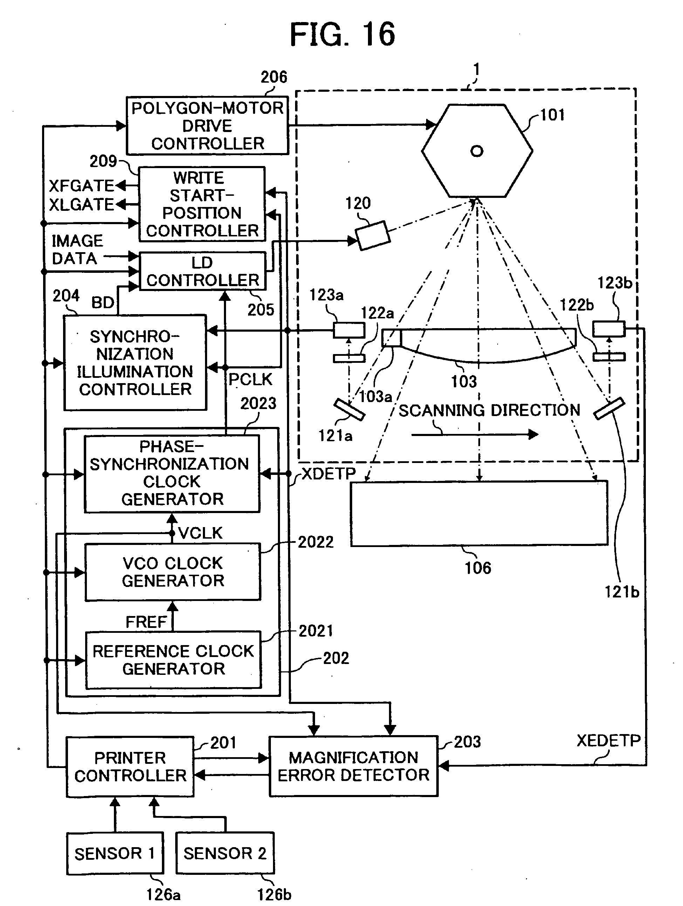

FIG. 16 is a schematic diagram showing a light-beam scanning device and an image-formation control system in an image forming apparatus according to the present embodiment. As shown in FIG. 16, outputs of the detection of the first and second sensors 126a and 126b are input to the printer controller 201. A start-side synchronization detection signal XDETP output from the first synchronization detecting sensor 123a and a pixel clock PCLK output from the pixel-clock generator 202 are input to the write-start-position controller 209.

The light-beam scanning device and the image-formation control system in the color-image forming apparatus are analogous to those in the first embodiment. However, as shown in FIG. 16, the configuration for black is the same as that shown in FIG. 2, but for the other colors, the second synchronization sensor 123b, the second lens 122b, the second mirror 121b, and the magnification error detector 203 are not provided. The printer controller 201 is common to the individual colors.

In the color image forming apparatus having such a configuration, signals of the image-position shift correction patterns BK1, C1, M1, Y1, BK2, C2, M2, Y2, BK3, C3, M3, Y3, BK4, C4, M4, and Y4 detected by the first and second sensors 126a and 126b are sent to the printer controller 201, and the amount (time) of shift of each color relative to BK is determined. The detection timings of the oblique-line patterns BK2, C2, M2, Y2, BK4, C4, M4, and Y4 vary when the image position or the image magnification in the main-scanning direction changes. The detection timings of the lateral-line patterns vary when the image position in the sub-scanning direction shifts.

Specifically, in the main-scanning direction, a time from the pattern C1 to the pattern C2 is compared with a time from the pattern BK1 to the pattern BK2 to determine the amount of shift TBKC12. Further, a time from the pattern C3 to the pattern C4 is compared with a time from the pattern BK3 to the pattern BK4 to determine the amount of shift TBKC34. Thus, TBKC34 - TBKC12 represents a magnification error of a cyan image relative to a black image, and the pixel clock frequency is changed by an amount corresponding to the magnification error. The corrected pixel clock is used to form the same pattern and TBKC12 and TBKC34 are similarly determined. The value TBKC34 + TBKC12)/2 represents a main-scanning shift of a cyan image relative to a black image. Thus, for each period of a writing clock, the write-start timing is changed by an amount corresponding to the shift. While the description has been given of the case of a cyan image, similar operations are also performed on magenta and yellow images.

In the sub-scanning direction, the sub-scan shift of a cyan image relative to a black image is expressed by:

$$((TBKC3 + TBKC1)/2) - Tc$$

where Tc indicates an ideal time interval when no shift occurs between the color positions, TBKC1 indicates a time from the pattern BK1 to the pattern C1, and TBKC3 indicates a time from the pattern BK3 to the pattern C3. Thus, for each line, the write-start timing is changed by an amount corresponding to the sub-scan shift. Similar operations are also performed on magenta and yellow images.

Although the description has been given of an example in which the detection of a magnification error and the detection of a main-scan shift are performed using different patterns, they can be performed using the same pattern by determining a change in time due to magnification error correction.

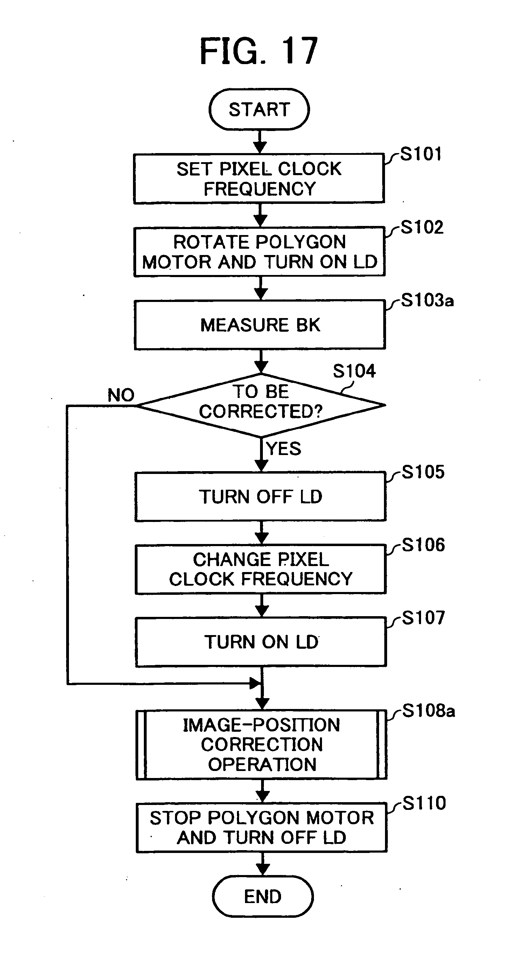

FIG. 17 is a flowchart showing a processing procedure for correction processing in the present embodiment. In this processing procedure, processing for black is executed in step S103a instead of the processing in step S103 in the processing procedure for the image magnification correction shown in FIG. 10 according to the first embodiment, and processing for image-position correction operation is executed in step S108a instead of the processing in step S108.

The image-formation completion determination processing in step S109 is eliminated. This is because the measurement between two points is performed only for black in step S103a. That is, in the present embodiment, the processing in step S103a is performed prior to the image-position correction operation (step S108a) to perform magnification correction based on the measurement between two points. Unlike the processing in the first embodiment, the magnification correction is performed only for black. Other processing is analogous to the processing in the first embodiment.

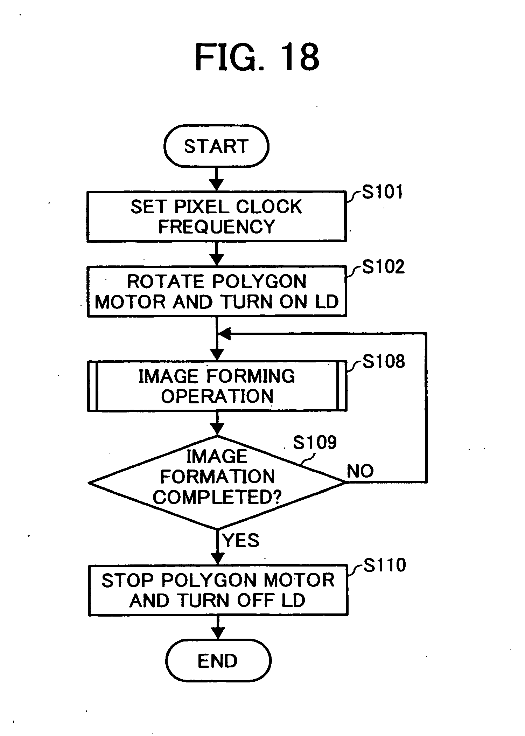

FIG. 18 is a flowchart showing a processing procedure for the image formation operation in the present embodiment. In the processing procedure for the image formation operation, the processing in steps S101, S102, and S108 to S110 in the flowchart shown in FIG. 10 is performed. However, since the image-position correction operation has been performed in the processing shown in FIG. 17, the magnification-correction based on the measurement between two points is not performed. Instead, image formation is performed based on the pixel clock frequency determined in the image-position correction operation.

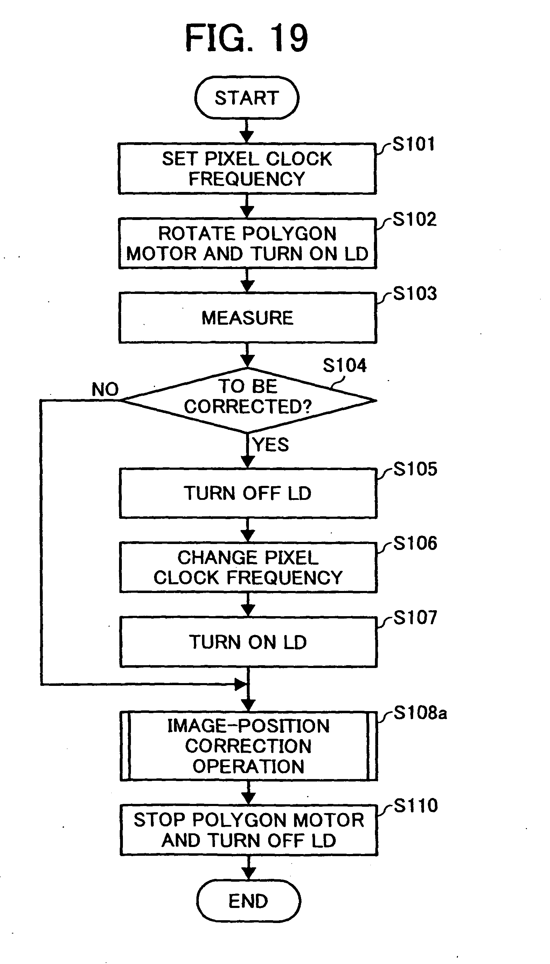

In the present embodiment, although the measurement between two points is performed for only one color (i.e., black in this case) to perform image-position correction, the light-beam scanning device 16 and the image-formation control system shown in FIG. 1 may also be provided for each color, as in the first embodiment. FIG. 19 is a flowchart showing a processing procedure for such a configuration. In this processing procedure, after a magnification correction operation analogous to the operation in the first embodiment is performed for each color (in steps S101 to S107), an image-position correction operation is performed (in step S108a). The image formation operation itself is performed using processes similar to those in the first embodiment.

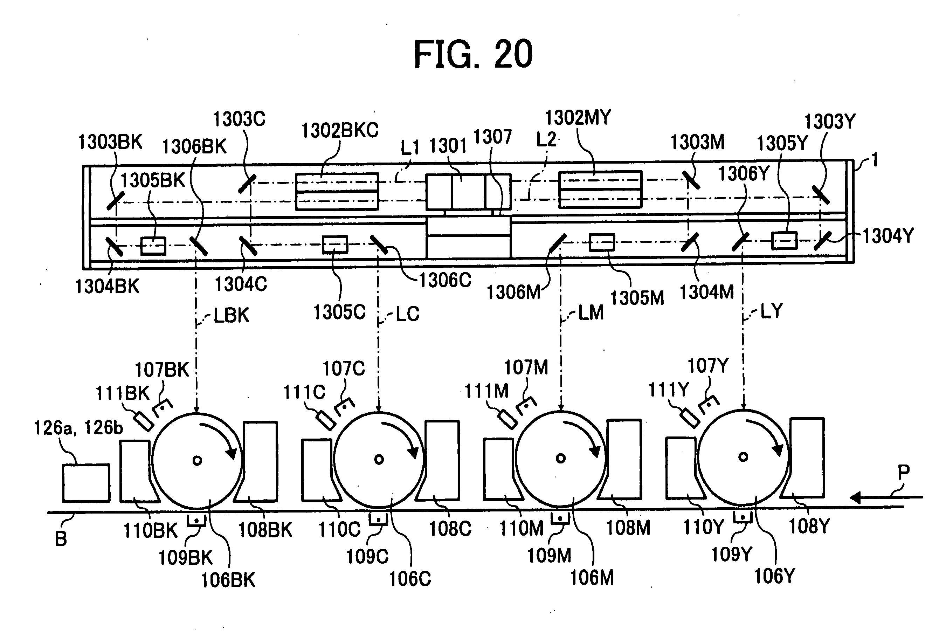

FIG. 20 is a schematic diagram showing a direct-transfer tandem image-forming apparatus according to a fourth embodiment. This image forming apparatus includes four image forming sections and one light-beam scanning device in order to form a color image in which images of four colors (yellow, magenta, cyan, and black) are superimposed. For each color, a charger, a developing unit, a transfer unit, a cleaning unit, and a discharger are disposed around a photoreceptor. Thus, an image is formed on recording paper P through charging, exposure, developing, and transferring, which are typical electrophotographic processes. An image of a first color is formed on the recording paper P, which is conveyed in the arrow direction by a transfer belt. Next, images of second, third, and fourth colors are sequentially transferred, so that a color image in which the images of four colors are superimposed can be formed on the recording paper P. The fixing device (not shown) fixes the image on the recording paper P. The light-beam scanning device is different from the one in the first embodiment shown in FIG. 1. The image forming units around the photoreceptor are analogous to those shown in FIG. 1, and thus descriptions thereof will not be given below.

In a light-beam scanning device 1 of the present embodiment, one polygon mirror 1301 is used, and an upper portion and a lower portion on the polygon mirror 1301 deflect light beams L1 and L2, which are different colors, to perform scanning. The polygon mirror 1301 is driven and rotated by a polygon motor 1307. The light beams L1 and L2 are split in opposite directions by the polygon mirror 1301, so that the light beams L for four colors scan on photoreceptors 106BK, 106C, 106M, and 106Y (hereinafter, the relationships of units for the individual colors will be described using the color abbreviations, such as 106BKCMY). The light beams of the individual colors are deflected by the polygon mirror 1301, pass through fθ lenses 1302BKC and 1302MY, and are returned by a first mirror 1303BKCMY and a second mirror 1304BKCMY. The light beams then pass through a BTL 1305BKCMY, are returned by a third mirror 1306BKCMY, and scan on a photoreceptor 106BKCMY.

A charger 107BKCMY, a developing unit 108BKCMY, a transfer unit 109BKCMY, a cleaning unit 110BKCMY, and a discharger 111BKCMY are disposed around the photoreceptor BKCMY106.

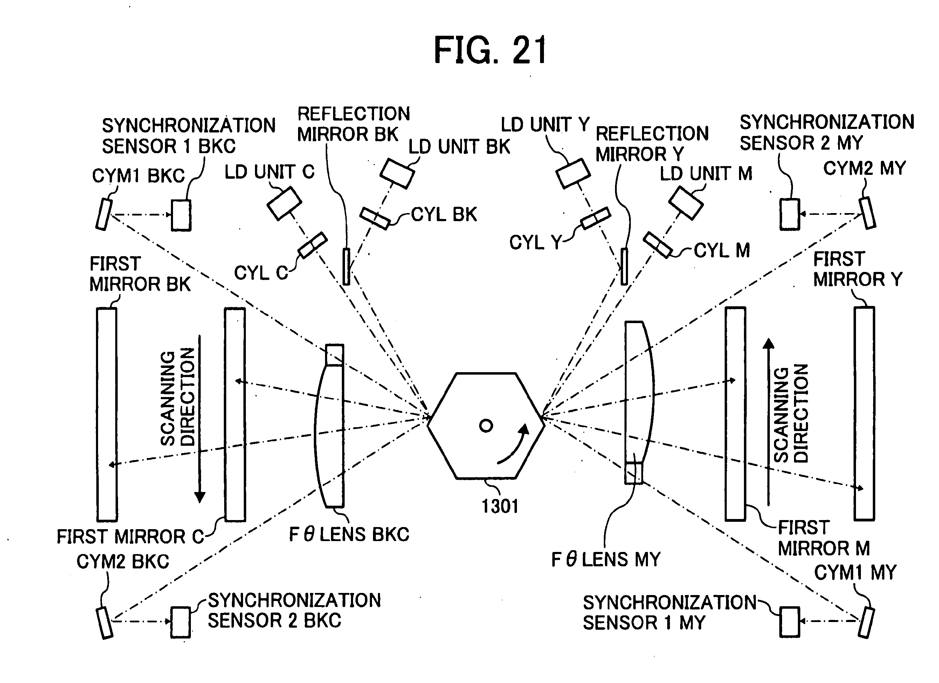

FIG. 21 shows a top view of the light-beam scanning device shown in FIG. 20. In FIG. 21, reference numerals are omitted. Light beams from an LD unit Y and an LD unit BK pass through cylindrical lenses (CYL), are made incident on a lower surface of the polygon mirror by reflective mirrors, and are deflected by the rotation of the polygon mirror. The deflected light beams pass through fθ lenses and are returned by first mirrors. Light beams from an LD unit M and an LD unit C pass through cylindrical lenses (CYL), are incident on an upper surface of the polygon mirror, and are deflected by the rotation of the polygon mirror. The deflected light beams pass through the fθ lenses and are returned by the first mirrors. In this embodiment, cylindrical mirrors CYM1_BKC, CYM1_MY, CYM2_BKC, and CMY2_MY and synchronization sensors 1_BKC, 1_MY, 2_BKC, and 2_MY are provided at two opposite ends of write portions in the main-scanning direction. The light beams that have passed through the fθ lenses are reflected and focused by the cylindrical mirrors CYM1_BKC, CYM1_MY, CYM2_BKC, and CYM2_MY, and are incident on the synchronization sensors 1_BKC, 1_MY, 2_BKC, and 2_MY. The synchronization sensors 1_BKC and 1_MY serve as synchronization detecting sensors for detecting the start-side synchronization detection signal XDETP. The synchronization sensors 2_BKC and 2_MY serve as synchronization detecting sensors for detecting the end-side synchronization detection signal XEDETP. The light beam from the LD unit C and the light beam from the LD unit BK are incident on the same cylindrical mirrors CYM1_BKC and CYM2_BKC and the same synchronization sensors 1_BKC and 2_BKC. The same applies to the LD units Y and M. Since two light beams are incident on the same sensor, the incident timings of the light beams are made different from each other so that both of them can be individually detected. However, individual sensors may be provided for the light beams of the respective colors. As shown in FIG. 21, scanning of Y and M is performed in a direction opposite to C and BK.

When the image-formation control system is configured so that two light beams are incident on the same synchronization detecting sensor, it is necessary to provide a separation circuit for separating the start-side synchronization detection signal XDETP into synchronization detection signals for the respective colors. In such a case, in the image-formation control system shown in FIG. 2, the synchronization detection signals for the respective colors, the signals being separated by the separation circuit (not shown), are sent to the phase-synchronization clock generator, the synchronization-detection illumination controller, and the magnification-error detector. When synchronization detecting sensors are provided for the light beams of the respective colors, the same configuration shown in FIG. 2 is used for the light beam of each color.

In the image forming device having this configuration, when the image magnification of Y or M whose scanning direction is opposite to that of BK changes, an image position shift corresponding to the change occurs in the main-scanning direction. With respect to C, when the amount of magnification change is the same, no position shift occurs. Thus, the magnification correction accuracy directly affects the correction accuracy for a main-scanning position shift.

The correction scheme in the third embodiment can also be used in the present embodiment. In the third embodiment, when the measurement between two points is not properly performed for even one color due to some failure, no correction is performed on all the colors. In the present embodiment, however, only when the measurement between two points is not properly performed for color in the same scanning direction, no correction is performed, and correction based on the result of the measurement between two points is performed for color in the opposite direction.

The individual units for which descriptions have not been particularly given are configured in the same manner as those in the first and third embodiments and function in the same manner.

As described above, the first to fourth embodiments have the following advantages:

1) The frequency of image magnification correction can be reduced compared to the related art to maintain the image quality.
2) The frequency of color shift correction can be reduced compared to the related art to maintain the image quality.
3) The magnification correction can be easily performed.
4) The correction accuracies of the magnification error and the image position can be improved.

This invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

**Claims**

1. An optical scanning apparatus, comprising:

    a light source (120) for outputting light beams (L), the light source (120) being turned on and being controlled in accordance with image data;
    deflecting means (101) for deflecting the output light beams in a main-scanning direction;
    an fθ lens (103) for correcting the deflected light beams from constant-angular-velocity scanning to constant-velocity scanning;
    first and second light-beam detecting means (123a, 123b) for detecting the light beams, deflected by the deflecting means (101), at two spots along the main-scanning direction at edge portions of the fθ lens, the first light-beam detecting means (123a) being located at a scanning-start side and the second light-beam detecting means (123b) being located at a scanning-end side;
    wherein the light beam that is incident on the first light-beam detecting means (123a) is not transmitted through the fθ lens (103), and the light beam that is incident on the second light-beam detecting means (123b) is transmitted through the fθ lens (103)
    measuring means for measuring a time difference between a start-side synchronization detection signal XDETP output from the first light-beam detecting means (123a) when the first light-beam detecting means (123a) detects the light beam and an end-side synchronization detection signal XEDETP output from the second light-beam detecting means (123b) when the second light-beam detecting means (123b) detects the light beam; and
    correcting means (203) for correcting an image magnification in the main-scanning direction based on the measured time difference.

2. The optical scanning device according to claim 1,
wherein the light source includes
multiple light sources for respective colors.

3. The optical scanning device according to claim 2,
wherein at least one of the light beams output from the light sources and deflected in the main-scanning direction
by the deflecting means (101) has a scanning direction opposite to another light beam.

4. The optical scanning device according to claim 1,
wherein the correcting means (203) performs correction by an amount corresponding to twice a magnification error
determined based on a result of the measurement.

5. The optical scanning device according to one of claims 1 to 4, wherein, with respect to at least one spot and for
each pixel, the correcting means corrects (203) the image magnification by changing and controlling a period of a
clock for controlling illumination of the light beams.

6. An image forming apparatus comprising:

   the optical scanning apparatus according to any one of claims 1 to 5; and
   image forming means for forming a visible image by forming a latent image through illuminating a rotating or
   moving image holder with the light beams output from the light source and by developing the latent image.

7. The image forming apparatus according to claim 6 further comprising:

   second image forming means for forming a visible image by forming latent images through illuminating rotating
   or moving image holders with the light beams output from the light sources and by developing the latent images;
   pattern detecting means (126a, 126b) for detecting image-position-shift correction patterns for detecting an
   amount of shift of an image of each color; and
   color shift correcting means (201) for correcting an amount of shift of color relative to a reference color based
   on the detected patterns.

8. The image forming apparatus according to claim 7,
wherein the color shift correcting means (201) performs correction by an amount corresponding to twice a magnification error determined based on a result of the measurement.

9. The image forming apparatus according to claim 7,
wherein, with respect to at least one spot and for each pixel, the color shift correcting means (201) corrects the
image magnification by changing a period of a clock for controlling illumination of the light beams.

## Patentansprüche

1. Optische Abtastvorrichtung, die umfasst:

   eine Lichtquelle (120) zum Ausgeben von Lichtstrahlen (L), wobei die Lichtquelle (120) in Übereinstimmung
   mit Bilddaten eingeschaltet und gesteuert wird;
   Ablenkmittel (101) zum Ablenken der ausgegebenen Lichtstrahlen in einer Hauptabtastrichtung;
   eine fθ-Linse (103) zum Korrigieren der abgelenkten Lichtstrahlen vom Abtasten bei konstanter Winkelgeschwindigkeit zum Abtasten bei konstanter Geschwindigkeit ;
   erste und zweite Lichtstrahl-Detektionsmittel (101) zum Detektieren der Lichtstrahlen, die durch die Ablenkmittel
   (101) abgelenkt wurden, an zwei Punkten entlang der Hauptabtastrichtung an Randabschnitten der fθ-Linse,
   wobei die ersten Lichtstrahl-Detektionsmittel (123a) an einer Abtastbeginn-Seite angeordnet sind und die zweiten Lichtstrahl-Detektionsmittel (123b) an einer Abtastende-Seite angeordnet sind;
   wobei der Lichtstrahl, der an den ersten Lichtstrahl-Detektionsmitteln (123a) auftrifft, durch die fθ-Linse nicht
   durchgelassen wird und der Lichtstrahl, der an den zweiten Lichtstrahl-Detektionsmitteln (123b) auftrifft, durch
   die fθ-Linse durchgelassen wird,
   Messmittel zum Messen einer Zeitdifferenz zwischen einem startseitigen Synchronisationsdetektionssignal
   XDETP, das von den ersten Lichtstrahl-Detektionsmitteln (123a) ausgegeben wird, wenn die ersten Lichtstrahl-Detektionsmittel (123a) den Lichtstrahl detektieren, und einem endeseitigen Synchronisationsdetektionssignal XEDETP, das von den zweiten Lichtstrahl-Detektionsmitteln (123b) ausgegeben wird, wenn die zweiten Lichtstrahl-Detektionsmittel (123b) den Lichtstrahl detektieren; und

Korrekturmittel (203) zum Korrigieren einer Bildverstärkung in der Hauptabtastrichtung anhand der gemessenen Zeitdifferenz.

2. Optische Abtastvorrichtung nach Anspruch 1,
   wobei die Lichtquelle umfasst:

   mehrere Lichtquellen für entsprechende Farben.

3. Optische Abtastvorrichtung nach Anspruch 2,
   wobei wenigstens einer der Lichtstrahlen, der von den Lichtquellen ausgegeben wird und in der Hauptabtastrichtung durch die Ablenkmittel (101) abgelenkt wird, eine Abtastrichtung aufweist, die zu einem anderen Lichtstrahl entgegengesetzt ist.

4. Optische Abtastvorrichtung nach Anspruch 1,
   wobei die Korrekturmittel (203) eine Korrektur um einen Betrag ausführen, der dem Zweifachen eines Verstärkungsfehlers entspricht, der anhand des Ergebnisses der Messung bestimmt wird.

5. Optische Abtastvorrichtung nach einem der Ansprüche 1 bis 4, wobei in Bezug auf wenigstens einen Lichtpunkt und für jedes Bildelement die Korrekturmittel (203) die Bildverstärkung durch Ändern und Steuern einer Periode eines Taktes zum Steuern einer Beleuchtung der Lichtstrahlen korrigieren.

6. Bilderzeugungsvorrichtung, die umfasst:

   die optische Abtastvorrichtung nach einem der Ansprüche 1 bis 5; und
   Bilderzeugungsmittel zum Erzeugen eines sichtbaren Bilds durch Erzeugen eines latenten Bilds durch Beleuchten eines rotierenden oder sich bewegenden Bildhalters mit den Lichtstrahlen, die von der Lichtquelle ausgegeben werden, und durch Entwickeln des latenten Bildes.

7. Bilderzeugungsvorrichtung nach Anspruch 6, die ferner umfasst:

   zweite Bilderzeugungsmittel zum Erzeugen eines sichtbaren Bilds durch Erzeugen latenter Bilder durch Beleuchten rotierender oder sich bewegender Bildhalter mit den Lichtstrahlen, die von den Lichtquellen ausgegeben werden, und durch Entwickeln der latenten Bilder;
   Musterdetektionsmittel (126a, 126b) zum Detektieren von Bildpositionsverschiebungs-Korrekturmustern zum Detektieren eines Verschiebungsbetrags eines Bilds für jede Farbe; und
   Farbverschiebungskorrekturmittel (201) zum Korrigieren eines Verschiebungsbetrags einer Farbe relativ zu einer Referenzfarbe anhand der detektierten Muster.

8. Bilderzeugungsvorrichtung nach Anspruch 7,
   wobei die Farbverschiebungskorrekturmittel (201) eine Korrektur um einen Betrag ausführen, der dem Zweifachen eines Verstärkungsfehlers entspricht, der anhand eines Ergebnisses der Messung bestimmt wird.

9. Bilderzeugungsvorrichtung nach Anspruch 7,
   wobei die Farbverschiebungskorrekturmittel (201) in Bezug auf wenigstens einen Lichtpunkt und für jedes Bildelement die Bildverstärkung durch Ändern einer Periode eines Takts zum Steuern einer Beleuchtung der Lichtstrahlen korrigieren.

**Revendications**

1. Dispositif de balayage optique, comprenant :

   une source de lumière (120) pour délivrer des faisceaux de lumière (L), la source de lumière (120) étant activée et étant commandée conformément à des données d'image ;
   des moyens de déflexion (101) pour défléchir les faisceaux de lumière délivrés dans une direction de balayage principal ;

une lentille fθ (103) pour corriger les faisceaux de lumière défléchis d'un balayage à vitesse angulaire constante en un balayage à vitesse constante ;

des premiers et deuxièmes moyens de détection de faisceau de lumière (123a, 123b) pour détecter les faisceaux de lumière, défléchis par les moyens de déflexion (101), en deux points le long de la direction de balayage principal au niveau des parties de bord de la lentille fθ, les premiers moyens de détection de faisceau de lumière (123a) étant situés d'un côté de début de balayage et les deuxièmes moyens de détection de faisceau de lumière (123b) étant situés d'un côté de fin de balayage ;

dans lequel le faisceau de lumière qui frappe les premiers moyens de détection de faisceau de lumière (123a) n'est pas transmis à travers la lentille fθ (103), et le faisceau de lumière qui frappe les deuxièmes moyens de détection de faisceau de lumière (123b) est transmis à travers la lentille fθ (103),

des moyens de mesure pour mesurer une différence de temps entre un signal de détection de synchronisation côté début XDETP délivré par les premiers moyens de détection de faisceau de lumière (123a) lorsque les premiers moyens de détection de faisceau de lumière (123a) détectent le faisceau de lumière et un signal de détection de synchronisation côté fin XEDETP délivré par les deuxièmes moyens de détection de faisceau de lumière (123b) lorsque les deuxièmes moyens de détection de faisceau de lumière (123b) détectent le faisceau de lumière ; et

des moyens de correction (203) pour corriger un grossissement d'image dans la direction de balayage principal sur la base de la différence de temps mesurée.

2. Dispositif de balayage optique selon la revendication 1,
dans lequel la source de lumière comprend :

de multiples sources de lumière pour des couleurs respectives.

3. Dispositif de balayage optique selon la revendication 2,
dans lequel au moins l'un des faisceaux de lumière délivrés par les sources de lumière et défléchis dans la direction de balayage principal par les moyens de déflexion (101) a une direction de balayage opposée à celle d'un autre faisceau de lumière.

4. Dispositif de balayage optique selon la revendication 1,
dans lequel les moyens de correction (203) effectuent une correction d'une quantité correspondant à deux fois une erreur de grossissement déterminée sur la base d'un résultat de la mesure.

5. Dispositif de balayage optique selon l'une des revendications 1 à 4, dans lequel, en ce qui concerne au moins un point et pour chaque pixel, les moyens de correction (203) corrigent le grossissement d'image en modifiant et commandant une période d'une horloge pour commander l'illumination des faisceaux de lumière.

6. Appareil de formation d'image comprenant :

le dispositif de balayage optique selon l'une quelconque des revendications 1 à 5 ; et
des moyens de formation d'image pour former une image visible en formant une image latente par l'illumination d'un support d'image en rotation ou en mouvement avec les faisceaux de lumière délivrés par la source de lumière et en développant l'image latente.

7. Appareil de formation d'image selon la revendication 6, comprenant en outre :

des deuxièmes moyens de formation d'image pour former une image visible en formant des images latentes par l'illumination de supports d'image en rotation ou en mouvement avec les faisceaux de lumière délivrés par les sources de lumière et en développant les images latentes ;
des moyens de détection de motif (126a, 126b) pour détecter des motifs de correction de décalage de position d'image pour détecter une quantité de décalage d'une image de chaque couleur ; et
des moyens de correction de décalage de couleur (201) pour corriger une quantité de décalage de couleur par rapport à une couleur de référence sur la base des motifs détectés.

8. Appareil de formation d'image selon la revendication 7,
dans lequel les moyens de correction de décalage de couleur (201) effectuent une correction d'une quantité correspondant à deux fois une erreur de grossissement déterminée sur la base d'un résultat de la mesure.

**9.** Appareil de formation d'image selon la revendication 7,
dans lequel, en ce qui concerne au moins un point et pour chaque pixel, les moyens de correction de décalage de couleur (201) corrigent le grossissement d'image en modifiant une période d'une horloge pour commander l'illumination des faisceaux de lumière.

# FIG. 1

# FIG. 2

# FIG. 3

EP 1 821 131 B1

# FIG. 4

EP 1 821 131 B1

# FIG. 5

IMAGE DATA FROM EXTERNAL DEVICE (FRAME MEMORY, SCANNER, OR THE LIKE) → LINE MEMORY (210)

XLGATE →

PCLK →

→ IMAGE SIGNAL

EP 1 821 131 B1

# FIG. 6

PCLK

XDETP

XLSYNC

XFGATE

MAIN-
SCANNING
COUNTER

0  1  2  ...  X  ...

XLGATE

IMAGE
SIGNAL

EP 1 821 131 B1

# FIG. 7

EP 1 821 131 B1

# FIG. 8

REFERENCE TIME DIFFERENCE TO

XEDETP

XDETP → CLR    Q → D    Q → T → COMPARISON AND CONTROL UNIT (2032) → MAGNIFICATION ERROR DATA

COUNTER (20311)    LATCH (20312)

VCLK

203

2031

EP 1 821 131 B1

# FIG. 9

# FIG. 10

```
        ( START )
            │
            ▼
┌─────────────────────┐ ┌─S101
│   SET PIXEL CLOCK   │
│      FREQUENCY      │
└─────────────────────┘
            │
            ▼
┌─────────────────────┐ ┌─S102
│   ROTATE POLYGON    │
│ MOTOR AND TURN ON LD│
└─────────────────────┘
            │
            ▼
┌─────────────────────┐ ┌─S103
│       MEASURE       │
└─────────────────────┘
            │
            ▼            S104
       ╱ TO BE ╲
  NO  ╱ CORRECTED? ╲
◄────╲             ╱
      ╲           ╱
         │YES
         ▼
┌─────────────────────┐ ┌─S105
│     TURN OFF LD     │
└─────────────────────┘
         │
         ▼
┌─────────────────────┐ ┌─S106
│    CHANGE PIXEL     │
│  CLOCK FREQUENCY    │
└─────────────────────┘
         │
         ▼
┌─────────────────────┐ ┌─S107
│     TURN ON LD      │
└─────────────────────┘
         │
         ▼
┌─────────────────────┐ ┌─S108
│       IMAGE         │
│  FORMING OPERATION  │
└─────────────────────┘
         │
         ▼          S109
       ╱ IMAGE ╲
      ╱ FORMATION ╲   NO
      ╲ COMPLETED? ╱────►
       ╲         ╱
         │YES
         ▼
┌─────────────────────┐ ┌─S110
│  STOP POLYGON MOTOR │
│   AND TURN OFF LD   │
└─────────────────────┘
         │
         ▼
       ( END )
```

# FIG. 11

VCLK

PCLK

↓

PCLK
(PHASE
CHANGE)

PHASE
CHANGE

PHASE
CHANGE

PHASE
CHANGE

CORRECTION
DATA

01b   01b   00b   01b   00b   00b

IMAGE MAGNIFICATION
CORRECTION AMOUNT

EP 1 821 131 B1

# FIG. 12

EP 1 821 131 B1

DISTANCE (32DOTS) BETWEEN TWO POINTS

SENSOR
OUTPUT

# FIG. 13

DISTANCE (32 DOTS) BETWEEN TWO POINTS

SENSOR OUTPUT

1ST LINE   | 1 | 2 | 3 | 4 | 5 | 6 | 7 |

2ND LINE   | 4 | 5 | 6 | 7 |

3RD LINE   | 7 |

4TH LINE   | 2 | 3 | 4 | 5 | 6 | 7 |

5TH LINE   | 5 | 6 | 7 |

6TH LINE

7TH LINE   | 3 | 4 | 5 | 6 | 7 |

8TH LINE   | 6 | 7 |

9TH LINE   | 1 | 2 | 3 | 4 | 5 | 6 | 7 |

10TH LINE  | 4 | 5 | 6 | 7 |

EP 1 821 131 B1

# FIG. 14

EP 1 821 131 B1

# FIG. 15

# FIG. 16

# FIG. 17

START

SET PIXEL CLOCK FREQUENCY — S101

ROTATE POLYGON MOTOR AND TURN ON LD — S102

MEASURE BK — S103a

TO BE CORRECTED? — S104

NO

YES

TURN OFF LD — S105

CHANGE PIXEL CLOCK FREQUENCY — S106

TURN ON LD — S107

IMAGE-POSITION CORRECTION OPERATION — S108a

STOP POLYGON MOTOR AND TURN OFF LD — S110

END

# FIG. 18

```
        ( START )
            |
            v
+---------------------------+  S101
|    SET PIXEL CLOCK        |
|      FREQUENCY            |
+---------------------------+
            |
            v
+---------------------------+  S102
|   ROTATE POLYGON          |
| MOTOR AND TURN ON LD      |
+---------------------------+
            |
            v  <---------------------+
+---------------------------+  S108   |
|    IMAGE FORMING          |         |
|     OPERATION             |         |
+---------------------------+         |
            |                          |
            v                          |
        /IMAGE\      S109              |
       / FORMATION \    NO            |
       \ COMPLETED? /-----------------+
        \        /
           |YES
           v
+---------------------------+  S110
| STOP POLYGON MOTOR        |
|   AND TURN OFF LD         |
+---------------------------+
            |
            v
        ( END )
```

# FIG. 19

START

SET PIXEL CLOCK FREQUENCY — S101

ROTATE POLYGON MOTOR AND TURN ON LD — S102

MEASURE — S103

TO BE CORRECTED? — S104

NO

YES

TURN OFF LD — S105

CHANGE PIXEL CLOCK FREQUENCY — S106

TURN ON LD — S107

IMAGE-POSITION CORRECTION OPERATION — S108a

STOP POLYGON MOTOR AND TURN OFF LD — S110

END

# FIG. 20

EP 1 821 131 B1

# FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002096502 A
- JP 9058053 A

- EP 1096292 A